(19) Europäisches Patentamt
European Patent Office
Office européen des brevets

(11) **EP 0 600 048 B1**

(12) **EUROPÄISCHE PATENTSCHRIFT**

(45) Veröffentlichungstag und Bekanntmachung des Hinweises auf die Patenterteilung:
**18.02.1998 Patentblatt 1998/08**

(21) Anmeldenummer: **93907741.8**

(22) Anmeldetag: **15.04.1993**

(51) Int Cl.6: **G01S 17/06**, G01S 7/48

(86) Internationale Anmeldenummer:
**PCT/CH93/00097**

(87) Internationale Veröffentlichungsnummer:
**WO 94/00778 (06.01.1994 Gazette 1994/02)**

(54) **VERFAHREN ZUR MESSUNG VON RELATIVEN WINKELN**

PROCESS FOR MEASURING RELATIVE ANGLES

PROCEDE DE MESURE D'ANGLES RELATIFS

(84) Benannte Vertragsstaaten:
**AT DE FR GB IT NL SE**

(30) Priorität: **22.06.1992 CH 1965/92**

(43) Veröffentlichungstag der Anmeldung:
**08.06.1994 Patentblatt 1994/23**

(73) Patentinhaber: **J. MÜLLER AG**
**CH-8307 Effretikon (CH)**

(72) Erfinder: **JÄGER, Heinz**
**CH-8604 Volketswil (CH)**

(74) Vertreter: **Troesch Scheidegger Werner AG**
**Patentanwälte,**
**Siewerdtstrasse 95,**
**Postfach**
**8050 Zürich (CH)**

(56) Entgegenhaltungen:
**DE-A- 3 725 896      DE-A- 4 039 881**
**GB-A- 2 194 702      GB-A- 2 213 673**

**Beschreibung**

Die vorliegende Erfindung betrifft eine Messeinrichtung nach dem Oberbegriff von Anspruch 1 und Anspruch 2.

Beispielsweise werden für die Bestimmung der Position einer Messplattform bezüglich Referenzpunkten mit bekannten Positionen die Distanzen zwischen der Messplattform und den Referenzpunkten vermessen. Daraus lässt sich die Position der Messplattform bestimmen. Anstelle der Messung der Distanzen kann auch die Winkellage der Messplattform in bezug auf die Referenzpunkte vermessen werden. Diese führt aufgrund eines Vermessungsplanes ebenfalls zur Bestimmung der Position der Messplattform. Diese Winkel können sowohl von der Messplattform oder jeweils von den einzelnen Referenzpunkten aus gemessen werden. Üblicherweise werden dabei die Winkel gegenüber einer definierten Referenzrichtung gemessen. Für die Messung dieser Relativwinkel wird herkömmlicherweise häufig ein manuell zu bedienendes optisches Winkelmessgerät verwendet.

Für die automatisierte Messung dieser Relativwinkel sind Verfahren und Einrichtungen bekannt, welche mit Hilfe von Lichtsendern an der Messplattform und Reflektoren an den Referenzpunkten arbeiten. Dabei wird herkömmlicherweise ein gebündelter Lichtstrahl auf den Referenzpunkt ausgerichtet, wobei dann die Ausrichtung dieses Lichtstrahls direkt den gesuchten Relativwinkel gegenüber der Referenzrichtung darstellt. Anhand eines bestehenden Vermessungsplanes kann danach die Position der Messplattform bestimmt werden.

So ist beispielsweise in DE-A-4 039 881 eine Messanordnung beschrieben, bei welcher von einer Messplattform ausgehende gebündelte Lichtstrahlen durch an Messpunkten angebrachten Reflektionsmitteln zu einem an der Messplattform vorgesehenen Lichtempfänger zurückgespiegelt werden. Der Lichtstrahl wird dabei um eine Achse der Messplattform rotiert und der relative Winkel der zwischen der Messplattform und den Messpunkten gebildeten Schenkel durch Registrierung der zeitlichen Abstände der Erfassung der zurückgespiegelten Lichtstrahlen und rechnergestützte Auswertung bestimmt. Die Vorrichtung selbst ist für die Messung von Radstellungen an Fahrzeugen ausgelegt und besteht aus einer Vielzahl von Einzelkomponenten und ist verhältnismässig kompliziert und aufwandig aufgebaut.

Aus GB-A-2 213 673 ist eine weiteres derartige Verfahren bekannt, bei welchem der Lichtstrahl zu einem ebenen Band aufgefächert wird. Damit können in einem Umgang des Lichtstrahles auch bezüglich der Messplattformebene unterschiedlich hoch angeordnete Messpunkte den Lichtstrahl zur Messplattform zurückspiegeln. Der Aufbau eines hierfür geeigneten Messgerätes ist nur schematisch dargestellt und zeigt einen aufwendig ausgerüsteten und grossen Apparat.

Aus GB-A-2 194 702 ist bekannt, derartige Verfahren für die Messung von Winkelabweichungen von Bahngeleisen einzusetzen. Beschrieben wird hier lediglich die Durchführung des Messverfahrens an sich, ein Hinweis auf die Ausführung der Vorrichtung wird nicht gegeben.

Die Aufgabe der vorliegenden Erfindung lag nun darin, eine einfache und kompakte Messeinrichtung zu finden, welche auf dem geschilderten, bekannten Messprinzip zur Ermittlung von relativen Winkeln beruht.

Diese Aufgabe wird erfindungsgemäss durch eine Vorrichtung mit den kennzeichnenden Merkmalen gemäss Anspruch 1 gelöst. Die erfinderische Anordnung der Lichtsender und Umlenkspiegel erlaubt einen sehr kompakten Aufbau der Messeinrichtung.

Weiter wird die Aufgabe erfindungsgemäss durch eine Vorrichtung mit den kennzeichnenden Merkmalen gemäss Anspruch 2 gelöst. Auch hierbei handelt es sich um eine äusserst kompakte Vorrichtung, mit welcher das Messverfahren zuverlässig und einfach durchgeführt werden kann.

Bevorzugte Ausführungsformen der Erfindung ergeben sich aus den abhängigen Ansprüchen 3 und 4.

Durch die sehr kompakte Bauform können vorteilhafterweise eine Mehrzahl von Lichtsendern im Gehäuse angeordnet werden. Damit lässt sich der Datendurchsatz erheblich steigern, was insbesondere die Genauigkeit der Messungen während des Verfahrens der Messeinrichtung erhöht. Diese erfindungsgemässen Vorrichtungen erlauben eine präzise Messung des relativen Winkels der Verbindung der Messplattform zu einem Messpunkt bezüglich der Referenzrichtung und daraus die genaue Positionsbestimmung der Messplattform, beispielsweise anhand eines Vermessungsplanes.

Die vorliegende Erfindung eignet sich insbesondere vorteilhaft für die Vermessung von Geleisen. Dabei werden die Reflektionsmittel an den dafür vorgesehenen Stellen am Geleiserand angebracht und die Messplattform wird auf einem Vermessungswagen positioniert. Die Bestimmung der Lage der Messplattform bezüglich des Horizonts erfolgt in bekannter Weise, wogegen die Winkel zu den Messpunkten erfindungsgemäss gemessen werden. Anhand eines für die Geleise vorhandenen Vermessungsplanes kann danach die Position der Messplattform und damit der Geleise bestimmt werden. Der grosse Vorteil liegt insbesondere in einer kontinuierlichen Messung, welche mit herkömmlichen Mitteln praktisch nicht realisiert werden konnte.

Ein Ausführungsbeispiel der Erfindung wird nachstehend anhand von Zeichnungen noch näher erläutert. Es zeigen

Fig. 1 die Aufsicht auf eine Messanordnung mit Messplattform und zwei Messpunkten;

Fig. 2 die Seitenansicht von Fig. 1;

Fig. 3 die Aufsicht auf eine Messanordnung mit zwei Licht fächern;

Fig. 4 die schematische Auswertung der Messung nach Fig. 3;

Fig. 5 den schematischen Querschnitt durch ein erfindungsgemässes Winkelmessgerät; und

Fig. 6 den schematischen Querschnitt durch ein weiteres, erfindungsgemässes Winkelmessgerät.

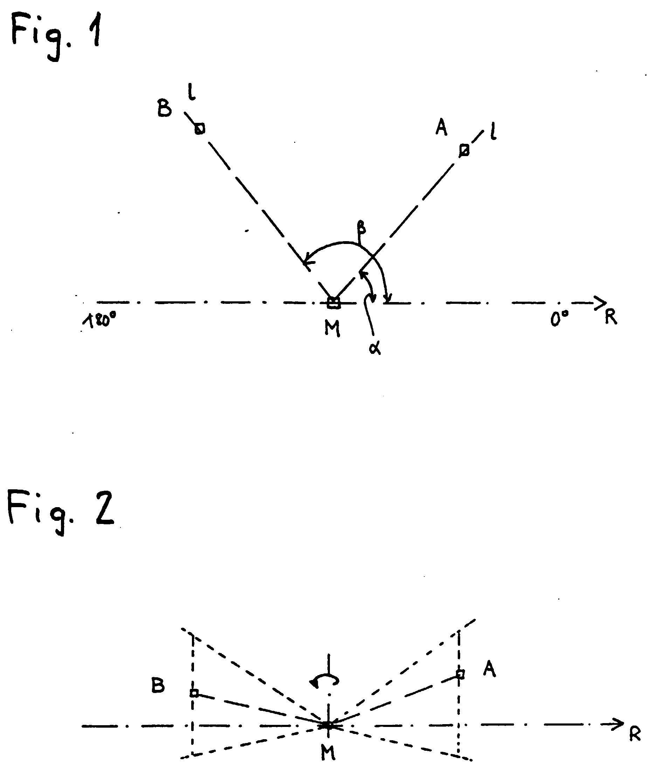

Zuerst wird das Prinzip des der Erfindung zugrundeliegenden Verfahrens anhand der Messung mit einem Lichtfächer dargestellt. Ausgegangen wird von einer Messplattform M, für welche ein Winkelbereich zur Messung von 0° bis 180° bestimmt worden ist, wobei die Referenzrichtung R auch gerade den Winkelbereich-Beginn darstellt. Innerhalb des Winkelbereiches seien zwei Messpunkte A und B mit Reflektionsmitteln angeordnet, wie in Fig. 1 in der Aufsicht schematisch dargestellt. Der Lichtstrahlfächer 1 wird um eine senkrechte Achse durch die Messplattform M im Gegenuhrzeigersinn verschwenkt. Dabei ist hier beispielsweise der Licht fächer derart aufgefächert, dass die Fächerebene parallel zur Drehachse ausgerichtet ist. Die Fächerbreite ist in der Seitenansicht von Fig. 2 durch gestrichelte Linien angedeutet. Wenn der Lichtfächer die Referenzrichtung R passiert, beginnen ein Zähler $Z_1$ sowie zwei weitere Zähler $Z_2$ und $Z_3$ mit einem vorbestimmten, konstanten Zähltakt zu zählen. Sobald der Lichtfächer um den Winkel $\alpha$ verschwenkt wurde, wird Licht durch den Messpunkt A reflektiert und damit der Zähler $Z_2$ angehalten. Sobald nun der Lichtfächer I weiter bis zum Winkel $\beta$ verschwenkt wird, wird auch der Zähler $Z_3$ aufgrund der Reflektion durch den Messpunkt B angehalten. Am Ende des Winkelbereiches, hier bei 180°, wird der Zähler $Z_1$ schliesslich ebenfalls angehalten. Selbstverständlich können noch weitere Zähler in der Messplattform M vorhanden sein, um eine grössere Anzahl von Messpunkten auszuwerten. Aus den Verhältnissen der Zählerstände von $Z_1$ und $Z_2$, resp. $Z_1$ und $Z_3$ und dem vorbestimmten Winkelbereich lassen sich die Winkel $\alpha$ und $\beta$ genau bestimmen :

$$\alpha = 180° * \frac{Z_2}{Z_1}$$

resp.

$$\beta = 180° * \frac{Z_3}{Z_1}$$

Dabei ist die Genauigkeit unabhängig von der Umdrehungsgeschwindigkeit des Lichtfächers I. Wenn beispielsweise der Zähltakt 180'000/sek beträgt und die Umdrehungsgeschwindigkeit der Lichtfächer 0,5 Umdrehungen / sek beträgt, so wäre der Zählerstand des Zählers $Z_1$ idealerweise 180'000. Wenn sich nun die Umdrehungszahl leicht ändert, so dass beispielsweise der Zählerstand des Zählers $Z_1$ nur noch 160'000 beträgt, so würden sich auch die Zählerstände der Zähler $Z_2$ und $Z_3$ im gleichen Verhältnis ändern und die errechneten Winkelwerte bleiben gleich.

Da die Taktfrequenz üblicherweise durch elektronische Bausteine erzeugt wird, welche mit sehr hoher Genauigkeit arbeiten, ist die Genauigkeit dieses Messverfahrens sehr hoch. Die Drehzahlschwankungen des Lichtfächers können damit praktisch vollständig kompensiert werden.

Aus den Fig. 1 und 2 wird klar, dass, mit nur einem Lichtfächer, nur derjenige, in der zur Drehachse senkrecht aufgespannten Ebene mit der Messplattform als Zentrum liegende Winkel gemessen werden kann.

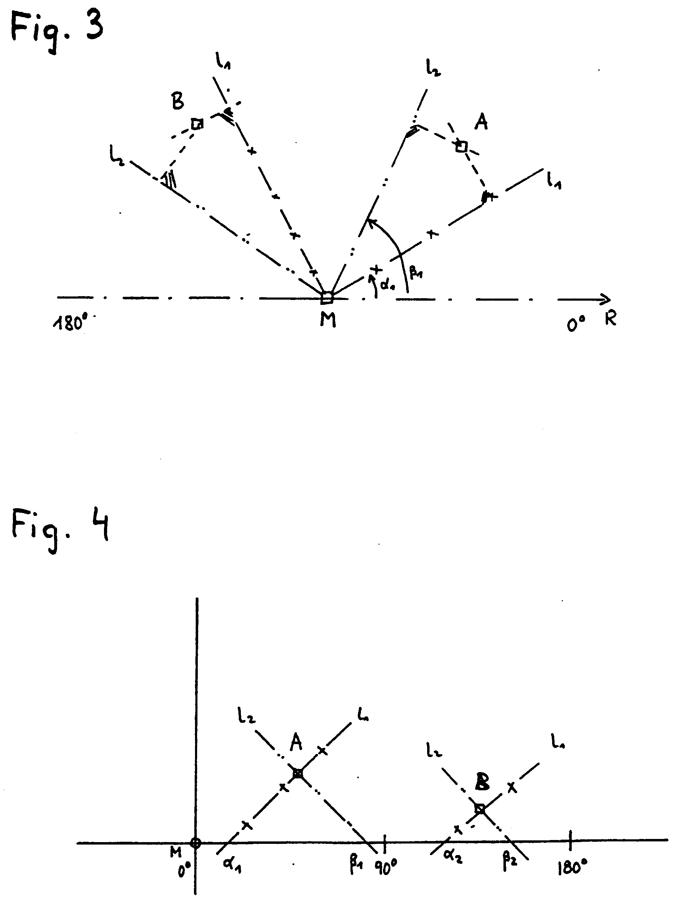

Für Anwendungen, welche den vollständigen relativen Winkel benötigen, können vorteilhafterweise zwei Lichtfächer vorgesehen werden, welche vorzugsweise in einem rechten Winkel zueinander stehen. Eine derartige Anordnung ist in Figur 3 schematisch mit denselben Messpunkten A und B wie in den Figuren 1 und 2 dargestellt. Ein Lichtfächer l1, der um einen Winkel von 45° gegenüber der Horizontalebene gekippt ist, wird wieder, wie vorgängig beschrieben, um die Achse der Messplattform im Gegenuhrzeigersinn verschwenkt. Beim Erreichen des Winkels $\alpha_1$ wird vom Messpunkt A ein Teil des Lichtes zurückgestrahlt und damit der betreffende erste Zähler $Z_2$ angehalten. In Figur 3 ist dabei die Schnittlinie des Lichtfächers $l_1$ mit der Horizontalebene mit einer durch Kreuze unterbrochenen Linie dargestellt. Beim Erreichen des Winkels $\alpha_2$ wird demgemäss vom Messpunkt B Licht zurückreflektiert und der nächste Zähler $Z_3$ angehalten. Nun wird noch ein zweiter Licht fächer $l_2$ um dieselbe Achse in derselben Richtung verschwenkt. Dies kann gleichzeitig oder zeitlich versetzt erfolgen. Dieser Licht fächer steht vorzugsweise in einem rechten Winkel zur Ausrichtung des ersten Lichtfächers $l_1$. Vorteilhafterweise folgt der zweite Lichtfächer $l_2$ mit einem Abstand von 180° dem Lichtfächer $l_1$. Hierbei erfolgen die Reflektionen von den Messpunkten A und B bei den Winkelstellungen $\beta_1$ und $\beta_2$ des Lichtfächers $l_2$. Diese Positionen werden ebenfalls mit drei weiteren Zählern $Z_4$ bis $Z_6$, wie vorgängig beschrieben, erfasst.

Die Auswertung dieser Winkelstellungen ist nun graphisch in Figur 4 dargestellt. Die Messpunkte stellen graphisch die Schnittpunkte der Lichtfächerlinien $l_1$ und $l_2$ dar, welche jeweils bei einem empfangenen Reflektionssignal in die Grafik eingetragen werden. Weil nun bei mehr als einem vorhandenen Messpunkt mehr Schnittpunkte dieser Linien entstehen, als effektiv Messpunkte vorhanden sind, müssen diese überzähligen Fehlstellen eliminiert werden. Dies erfolgt vorzugsweise dadurch, dass nur in zu bestimmenden Winkelbereichen solche Schnittpunkte zugelassen werden. Diese Winkelbereiche werden aufgrund einer groben Vorausbestimmung der Lage dieser Messpunkte festgelegt. Beispielsweise bei der Vermessung von Geleisen wird hierzu der dazugehörige Vermessungsplan verwendet, in welchem die Standorte der Messpunkte eingetragen sind.

Statt die Messpunkte aufgrund der Winkelstellungen zu klassifizieren (Basis: Grobplan), kann dies auch nach deren Entfernung zur Messplattform erfolgen, indem nach Intensität des reflektierten Lichtes selektiert wird.

Die gesamte Auswertung kann beispielsweise mittels eines Computers erfolgen, wobei die grobe Vorausbestimmung der Lage der Messpunkte beispielsweise in einem Speicher für die Auswertung zur Verfügung stehen kann.

Durch das dargestellte Verfahren ist es insbesondere auch möglich, die Winkelmessungen von einer sich ständig bewegenden Messplattform aus kontinuierlich durchzuführen. Dies ist gerade bei der erwähnten Vermessung von Geleisen, beispielsweise bei Reparatur- oder Erneuerungsarbeiten, von sehr grossem Vorteil.

Als Lichtquelle wird vorzugsweise ein Laserlichtsender verwendet. Dadurch kann auch mit verhältnismässig kleinem Energiebedarf eine genügende Reflektionsleistung auch bei grösseren Distanzen erzielt werden. Vorteilhafterweise werden in der entsprechenden Optik Filter zur Ausscheidung von Störsignalen vorgesehen, welche durch Sonnenlichtblendungen hervorgerufen werden können.

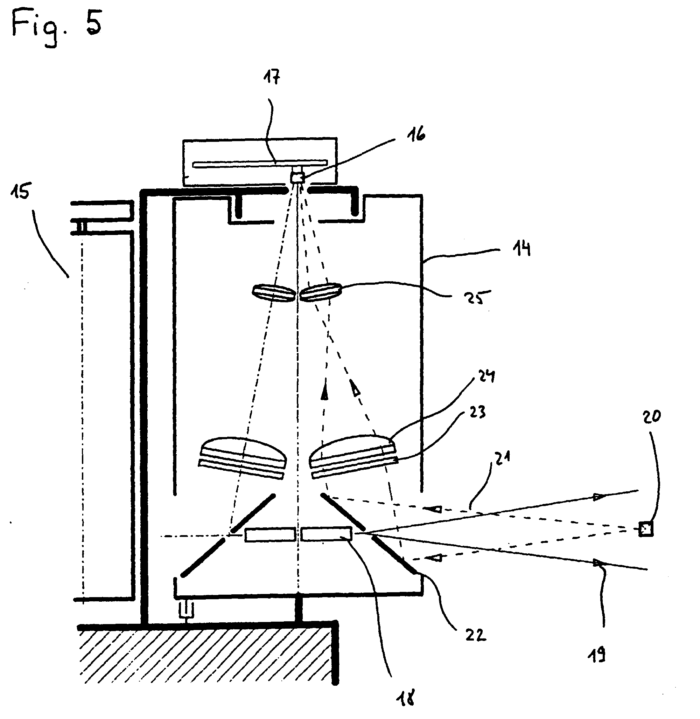

Eine bevorzugte Ausführungsform eines erfindungsgemässen Messgerätes ist nun in Figur 5 dargestellt. Hier wird ein zylindrisches, axial drehbar gelagertes Gehäuse 14 mittels eines Elektromotores 15 beispielsweise über einen Bandantrieb in Drehung versetzt. Ein lichtempfindlicher Sensor 16 ist dabei in der Drehachse des Gehäuses 14 feststehend an dessen Lagerungsrahmen zusammen mit der Auswertungselektronik 17 positioniert. Im Gehäuse 14 ist senkrecht zur Drehachse ein Lichtsender 18, vorzugsweise ein Laserlichtsender, angeordnet, welcher einen Lichtfächer 19 aussendet. Dieser Lichtfächer 19 ist entsprechend der vorangegangenen Beschreibung geneigt. Das von einem Messpunkt 20 reflektierte Licht 21 (gestrichelt dargestellt) wird über einen Umlenkspiegel 22 und eine Linsenanordnung 24,25 auf den Sensor 16 fokusiert. Dabei ist beispielsweise zusätzlich ein Interferenzfilter 23 vorgesehen, um Störungen auszufiltern. Vorzugsweise sind im Gehäuse eine Mehrzahl von Lichtsendern 18 vorgesehen, beispielsweise 4, wobei die Lichtfächerebenen von benachbarten Lichtsendern 18 vorzugsweise rechtwinklig zueinander ausgerichtet sind. Selbstverständlich lässt sich der Antrieb des Gehäuses 14 auch derart anordnen, dass der Messbereich, d.h. der Ausstrahlbereich der Lichtsender 18, auf dem vollem Umfang, gewährleistet ist.

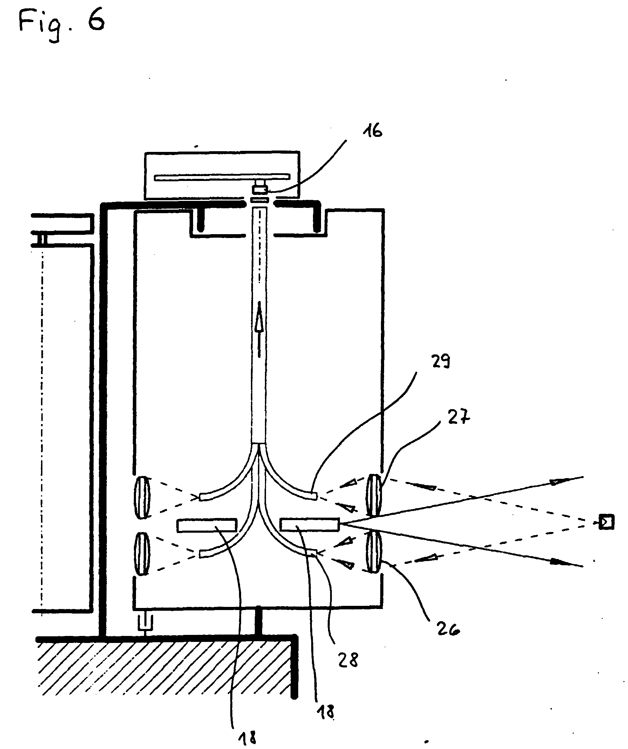

In Figur 6 ist eine weitere bevorzugte Ausführungsform eines erfindungsgemässen Messgerätes dargestellt. Der Aufbau ist im wesentlichen gleich wie bei dem in Figur 5 beschriebenen Gerät. Einzig der Empfangsteil wurde abgeändert, indem hier anstelle eines Umlenkspiegels zwei Linsen 26,27 angeordnet sind, welche direkt auf den Anfang von Lichtleiterfasern 28, 29 fokusiert sind. Die Lichtfasern leiten schliesslich die empfangenen Lichtsignale auf den Sensor 16. Hier ist beispielsweise ein Filter 30 direkt vor dem Sensor 16 angeordnet. Der Vorteil dieser Anordnung ist insbesondere darin zu sehen, dass eine Viehlzahl von Sendern 18 angeordnet werden können, wodurch der Datendurchsatz und damit die Messgenauigkeit gesteigert werden kann. Ein weiterer Vorteil liegt in der kurzen Brennweite der hier verwendeten Linsen 26 und 27.

**Patentansprüche**

1. Messeinrichtung mit einer Messplattform zur Messung der relativen Winkel zwischen einer Referenzrichtung dieser Messplattform und davon entfernten Messpunkten (20) mit Reflektionsmitteln, wobei die Messplattform wenigstens einen zu einem ebenen Band aufgefächerten Lichtstrahl (19) aussendenden Lichtsender (18) aufweist, mit Mitteln zum Verschwenkung des Lichtfächers (19) um eine Referenzachse der Messplattform in einem vorbestimmten Winkelbereich, und mit mindestens einem lichtempfindlichen Sensor (16), welcher mit mehreren Zählmitteln verbunden ist, welche mit einem Zähltakt betrieben werden, wobei einer vom Beginn des Winkelbereiches bis zu dessen Ende durchzählt und die anderen jeweils ebenfalls zu Beginn des Winkelbereiches mit Zählen beginnen und nacheinander beim Empfang des jeweils nächstfolgenden Reflektionssignales von einem Messpunkt (20) mit Zählen stoppen, und dass weiter eine Auswertungeinrichtung (17) vorhanden ist, welche aus den Zählerstandverhältnissen zwischen dem Zähler des gesamten Winkelbereiches und den anderen Zählern den jeweiligen relativen Winkel berechnet, dadurch gekennzeichnet, dass wenigstens ein Lichtsender (18) in einem um die Referenzachse der Messplattform drehbaren Gehäuse (14) derart angeordnet ist, dass die optische Achse des Lichtfächers (19) senkrecht zur Drehachse ausgerichtet ist, und dass vor jedem Lichtsender (19) ein Linsenpaar (26;27) vorgesehen ist, deren optische Achsen mit gleichem Abstand zu beiden Seiten der optischen Achse des jeweiligen Lichtsenders (18) in der Fächerebene des Lichtfächers (19) angeordnet sind, wobei für jede Linse (26;27) in deren Brennpunkt der Anfang eines Lichtleiters (29) vorgesehen ist, welcher einfallendes Licht auf den lichtempfindlichen Sensor (16), welcher in der Referenzachse angeordnet ist, leitet.

2. Messeinrichtung mit einer Messplattform zur Messung der relativen Winkel zwischen einer Referenzrichtung dieser Messplattform und davon entfernten Messpunkten (20) mit Reflektionsmitteln, wobei die Messplattform wenigstens einen zu einem ebenen Band aufgefächerten Lichtstrahl (19) aussendenden Lichtsender (18) aufweist, mit Mitteln zum Verschwenkung des Lichtfächers (19) um eine Referenzachse der Messplattform in einem vorbestimmten Winkelbereich, und mit mindestens einem lichtempfindlichen Sensor (16), welcher mit mehreren Zählmitteln verbunden ist, welche mit einem Zähltakt betrieben werden, wobei einer vom Beginn des Winkelbereiches bis zu dessen Ende durchzählt und die anderen jeweils ebenfalls zu Beginn des Winkelbereiches mit Zählen beginnen und nacheinander beim Empfang des jeweils nächstfolgenden Reflektionssignales von einem Messpunkt (20) mit Zählen stoppen, und dass weiter eine Auswertungeinrichtung (17) vorhanden ist, welche aus den Zählerstandverhältnissen zwischen dem Zähler des gesamten Winkelbereiches und den anderen Zählern den jeweiligen relativen Winkel berechnet, dadurch gekennzeichnet, dass wenigstens ein Lichtsender (18) in einem um die Referenzachse der Messplattform drehbaren Gehäuse (14) derart angeordnet ist, dass die optische Achse des Lichtfächers (19) senkrecht zur Drehachse ausgerichtet ist, und dass vor jedem Lichtsender (18) ein Umlenkspiegel (22) mit einer Öffnung für den Lichtfächer (19) vorgesehen ist, welcher derart angeordnet ist, dass einfallendes Licht (21) über eine Linsenoptik (23,24,25) auf den lichtempfindlichen Sensor (16), welcher in der Referenzachse angeordnet ist, geführt wird.

3. Messeinrichtung nach Anspruch 1 oder 2, dadurch gekennzeichnet, dass zwei Lichtsender (18) vorgesehen sind, welche derart angeordnet sind, dass die aufgefächerten Lichtstrahlen (19) der beiden Lichtsender (18) entgegengesetzt gerichtet von der Messeinrichtung ausgesendet werden und gegeneinander um 90° verschwenkt ausgerichtet sind.

4. Messeinrichtung nach einem der Ansprüche 1 bis 3, dadurch gekennzeichnet, dass als Lichtsender (18) Laserstrahlsender vorgesehen sind.

**Claims**

1. Measuring device with a measuring platform for measuring the relative angle between a reference direction of this measuring platform and measurement points (20) remote therefrom with reflection means, wherein the measuring platform comprises at least one light transmitter (18), which emits a light beam (19) fanned out into a plane band, with means for swivelling the light fan (19) about a reference axis of the measuring platform in a predetermined angular range, and with at least one light-sensitive sensor (16) connected to a plurality of counting means which are operated with a counting clock, wherein one counts through from the beginning of the angular range to the end thereof and the others in each case likewise start counting at the beginning of the angular range and stop counting in succession upon receiving the respective next reflection signal from a measurement point (20), and an evaluation device (17) is also provided, which device calculates the respective relative angle from the count ratios between the counter of the entire angular range and the other counters, characterised in that at least one light transmitter (18) is disposed in a housing (14) which can rotate about the reference axis of the measuring platform such that the optical axis of the light fan (19) extends perpendicularly to the rotational axis, and that a pair of lenses (26; 27) is provided before each light transmitter (18), the optical axes of which lenses lie at the same distance on both sides of the optical axis of the respective light transmitter (18) in the fan plane of the light fan (19), wherein the start of a light guide (29) is provided for each lens (26; 27) at the focal point thereof, which guide guides incident light onto the light-sensitive sensor (16), which is disposed at the reference axis.

2. Measuring device with a measuring platform for measuring the relative angle between a reference direction of this measuring platform and measurement points (20) remote therefrom with reflection means, wherein the measuring platform comprises at least one light transmitter (18), which emits a light beam (19) fanned out into a plane band, with means for swivelling the light fan (19) about a reference axis of the measuring platform in a predetermined angular range, and with at least one light-sensitive sensor (16) connected to a plurality of counting means which are operated with a counting clock, wherein one counts through from the beginning of the angular range to the end thereof and the others in each case likewise start counting at the beginning of the angular range and stop counting in succession upon receiving the respective next reflection signal from a measurement point (20), and an evaluation device (17) is also provided, which device calculates the respective relative angle from the count ratios between the counter of the entire angular range and the other counters, characterised in that at least one light transmitter (18) is disposed in a housing (14) which can rotate about the reference axis of the measuring platform such that the optical axis of the light fan (19) extends perpendicularly to the rotational axis, and that a deflecting mirror (22) with an opening for the light fan (19) is provided before each light transmitter (18), which mirror is disposed such that incident light (21) is guided via an optical lens system (23, 24, 25) onto the light-sensitive sensor (16), which is disposed at the reference axis.

3. Measuring device according to claim 1 or 2, characterised in that two light transmitters (18) are provided which are disposed such that the fanned-out light beams (19) of the two light transmitters (18) are emitted in opposite directions by the measuring device and are swivelled through 90° with respect to one another.

4. Measuring device according to one of claims 1 to 3, characterised in that laser beam transmitters are provided as light transmitters (18).

## Revendications

1. Dispositif de mesure avec une plate-forme de mesure pour mesurer les angles relatifs entre une direction de référence de cette plate-forme de mesure et des points de mesure (20) éloignés de celle-ci avec des moyens de réflexion, la plate-forme de mesure présentant au moins un émetteur de lumière (18) émettant un rayon lumineux (19) dispersé en une bande plane, avec des moyens pour faire pivoter l'éventail de lumière (19) autour d'un axe de référence de la plate-forme de mesure dans une zone angulaire prédéterminée, et avec au moins un capteur (16) sensible à la lumière, qui est relié à plusieurs moyens de comptage qui sont actionnés selon une cadence de comptage, l'un comptant depuis le début de la zone angulaire jusqu'à la fin de celle-ci et les autres commencent à compter respectivement également au début de la zone angulaire et arrêtent de compter l'un après l'autre à la réception du signal de réflexion respectivement suivant d'un point de mesure (20), et en ce qu'il est prévu en outre un dispositif d'évaluation (17) qui calcule à partir des rapports des états de compteur, entre le compteur de la zone angulaire totale et les autres compteurs l'angle relatif respectif, caractérisé en ce qu'au moins un émetteur de lumière (18) est disposé dans un boîtier (14) apte à tourner autour de l'axe de référence de la plate-forme de mesure de façon que l'axe optique de l'éventail de lumière (19) soit orienté perpendiculairement à l'axe de rotation, et en ce qu'il est prévu devant chaque émetteur de lumière (19) une paire de lentilles (26; 27) dont les axes optiques sont disposés à une distance égale des deux côtés de l'axe optique de l'émetteur de lumière respectif (18) dans le plan de dispersion de l'éventail de lumière (19), pour chaque lentille (26; 27) étant prévu dans le foyer de celle-ci le début d'un conducteur de lumière (29) qui guide la lumière incidente sur le capteur (16) réagissant à la lumière qui est disposé dans l'axe de référence.

2. Dispositif de mesure avec une plate-forme de mesure pour mesurer les angles relatifs entre une direction de référence de cette plate-forme de mesure et des points de mesure (20) éloignés de celle-ci avec des moyens de réflexion, la plate-forme de mesure présentant au moins un émetteur de lumière (18) émettant un rayon lumineux (19) dispersé en une bande plane, avec des moyens pour faire pivoter l'éventail de lumière (19) autour d'un axe de référence de la plate-forme de mesure dans une zone angulaire prédéterminée et avec au moins un capteur (16) réagissant à la lumière qui est relié à plusieurs moyens de comptage qui sont actionnés selon une cadence de comptage, l'un comptant depuis le début de la zone angulaire jusqu'à la fin de celle-ci et les autres commençant à compter respectivement également au début de la zone angulaire et s'arrêtent de compter l'un après l'autre lors de la réception du signal de réflexion respectivement suivant d'un point de mesure (20), et en ce qu'il est prévu en outre un dispositif d'évaluation (17) qui calcule à partir des rapports des états de compteur entre le compteur de la zone angulaire totale et les autres compteurs l'angle relatif respectif, caractérisé en ce qu'au moins un émetteur de lumière (18) est disposé dans un boîtier (14) apte à tourner autour de l'axe de référence de la plate-forme de mesure de façon que l'axe optique de l'éventail de lumière (19) soit orienté perpendiculairement à l'axe de rotation et en ce qu'il est prévu devant chaque émetteur de lumière (18) un miroir de déviation (22) avec une ouverture pour l'éventail de lumière (19) qui est disposé de façon que la lumière incidente (21) soit guidée par une optique à lentilles (23, 24, 25) sur le capteur (16) réagissant à la lumière qui est disposé dans l'axe de référence.

3. Dispositif de mesure selon la revendication 1 ou 2, caractérisé en ce que deux émetteurs de lumière (18) sont prévus qui sont disposés de telle façon que les rayons lumineux dispersés (19) des deux émetteurs de lumière (18) soient émis dans des sens opposés par le dispositif de mesure et soient orientés l'un relativement à l'autre selon un pivotement de 90°.

4. Installation de mesure selon l'une des revendications 1 à 3, caractérisée en ce que des émetteurs de rayon laser sont prévus comme émetteurs de lumière (18).

Fig. 1

Fig. 2

# Fig. 3

# Fig. 4

Fig. 5

# Fig. 6